# EUROPÄISCHE PATENTSCHRIFT

(11) **EP 3 201 041 B1**
(45) Veröffentlichungstag und Bekanntmachung des Hinweises auf die Patenterteilung: **14.02.2024**
(21) Anmeldenummer: 15767544.8
(22) Anmeldetag: 25.09.2015
(51) Int. Cl.: B60N 2/07, B60R 22/26

(54) **SCHIENENPAAR FÜR EINEN FAHRZEUGSITZ**
PAIR OF SLIDES FOR A VEHICLE SEAT
PAIRE DE GLISSIÈRES POUR SIÈGE DE VÉHICULE

(30) Priorität: 30.09.2014 DE 102014219866
(43) Veröffentlichungstag der Anmeldung: 09.08.2017
(73) Patentinhaber: KEIPER Seating Mechanisms Co., Ltd., Shanghai 201315 (CN)
(72) Erfinder: QUAST, Ingo, 40477 Duesseldorf (DE); SPRENGER, Erik, 42929 Wermelskirchen (DE); ZACHARIAS, Michael, 42799 Leichlingen (DE); KHEYFETS, Vitali, 42115 Wuppertal (DE)
(74) Vertreter: Kutzenberger Wolff & Partner
(86) Internationale Anmeldenummer: PCT/EP2015/072133
(87) Internationale Veröffentlichungsnummer: WO 2016/050648

(56) Entgegenhaltungen:
- EP-A2- 2 163 422
- DE-A1-102011 086 650
- DE-U1- 8 131 992
- FR-A1- 2 903 353
- US-A- 5 224 749

## Beschreibung

Die Erfindung betrifft ein Schienenpaar für einen Fahrzeugsitz und einen Längseinsteller mit zwei solchen Schienenpaaren sowie einen Fahrzeugsitz mit einem Längseinsteller, umfassend zwei solche Schienenpaare.

Aus der EP 0 856 429 A1 ist ein Sitzschienenpaar bekannt, bei dem vier Kugeln zwischen einer Unterschiene und einer Oberschiene vorgesehen sind. Je zwei Kugeln liegen auf beiden Seiten eines schräg geneigten Endabschnitts der Unterschiene an, welcher als Kugellaufbahn in seiner Form den Kugeln angepasst ist. Die Oberschiene umschließt die Kugeln auf der jeweils anderen Seite mit Abschnitten unterschiedlicher Neigung als Kugellaufbahnen. Die Verriegelung der beiden Sitzschienen erfolgt durch einen außermittig eingeführten Riegel. Bei ungleichmäßigen Belastungen besteht die Gefahr, dass die Kugeln ihre Laufbahnen verlassen und benachbarte Bereiche der Schienenprofile brinellieren, d.h. aufgrund der hohen Drücke das Material lokal plastisch verformen und Marken in Form von Kalotten oder raupenähnlichen Vertiefungen hinterlassen, welche sich beim Einstellen der Sitzschienen in Form von unerwünschten Kraftschwankungen und Beschleunigungen bemerkbar machen.

Aus der DE 10 2011 086 650 A1 ist als Strukturbauteil für einen Fahrzeugsitz eine Schienenanordnung bekannt, welche zwei Profilschienen umfasst.

Aufgabe der vorliegenden Erfindung ist es, ein verbessertes Schienenpaar für einen Fahrzeugsitz sowie einen Fahrzeugsitz mit einem solchen verbesserten Schienenpaar anzugeben.

Hinsichtlich des Schienenpaars wird die Aufgabe erfindungsgemäß mit den Merkmalen des Patentanspruchs 1 gelöst. Hinsichtlich des Längseinstellers wird die Aufgabe erfindungsgemäß durch die Merkmale des Patentanspruchs 7 gelöst. Hinsichtlich des Fahrzeugsitzes wird die Aufgabe erfindungsgemäß durch die Merkmale des Patentanspruchs 8 gelöst.

Vorteilhafte Weiterbildungen der Erfindung sind Gegenstand der Unteransprüche.

Die mit der Erfindung erzielten Vorteile bestehen insbesondere darin, dass ein solch ausgebildetes Schienenpaar mit einer bereichsweise abgeknickten und nach außen gebogenen Seitenwand der oberen Sitzschiene und somit durch eine Schrägstellung der Seitenwand oder Seitenflanke eine Festigkeit, insbesondere eine Schälfestigkeit (Peel Strength), dieser Sitzschiene in diesem Bereich deutlich verbessert ist.

In einer bevorzugten Ausführungsform der vorliegenden Erfindung ist die eine Seitenwand derart nach außen gebogen, dass diese zumindest in einem Anbindungsbereich der zugehörigen Sitzschiene mit einem Knick versehen ist, der sich zumindest im Anbindungsbereich entlang der Längsrichtung der Sitzschiene erstreckt. Durch die Schrägstellung der einen Seitenwand nur in einem Anbindungsbereich, beispielsweise von weiteren Komponenten, wie zum Beispiel einer Gurtanbindung, ist die Festigkeit, insbesondere die Schälfestigkeit, in diesem Anbindungsbereich gegenüber den anderen Schienenbereichen mit vertikalen Seitenwänden deutlich erhöht und somit verbessert. Ein solcher Knick im Gurtanbindungsbereich führt dazu, dass ein Ausbeulen an den Seitenwänden oder Schienenflanken im Gurtzug vermieden wird. Durch Schrägstellung auch der Seitenwand der Unterschiene korrespondierend zur Schrägstellung der Seitenwand der Oberschiene wird die Festigkeit, insbesondere die Schälfestigkeit, noch weiter erhöht.

Der Knick ist in der zumindest einen Sitzschiene im Wesentlichen auf Höhe einer Oberkante der anderen Sitzschiene eingebracht. Für einen homogenen Kontakt und ein homogenes Ineinandergreifen der Sitzschienen ist die Unterschiene mit einem korrespondierenden Knick oder mit einer korrespondierenden teilweisen Schrägstellung der Seitenwand versehen.

Des Weiteren kann der Knick im Bereich einer Schienenverriegelung und/oder eines Lagers in der oberen Sitzschiene eingebracht sein. Dabei ist der Knick oberhalb des lösbaren Schienenverriegelung in die Sitzschiene eingebracht.

Die Schienenverriegelung greift dabei in den abgeknickten Wandbereich in die Sitzschienen ein und verriegelt diese miteinander.

Des Weiteren ist ein abgewinkeltes Schienenende der unteren Sitzschiene parallel zum abgeknickten Bereich der oberen Sitzschiene angeordnet.

Zur Ausbildung von zumindest einer Wälzlaufbahn für die Wälzelemente im Zusammenwirkungsbereich der Sitzschienen ist die zumindest eine Seitenwand im nach außen gebogenen Bereich im Querschnitt im Wesentlichen U-förmig. Beispielsweise sind beide Schenkel des nach außen gebogenen und U-förmigen Bereichs parallel zueinander angeordnet.

Zur Ausbildung mehrerer Wälzlaufbahnen weist zumindest einer der beiden Schenkel ein Wellenprofil auf oder ist mehrfach gebogen oder abgewinkelt.

In einer bevorzugten Ausführungsform der vorliegenden Erfindung sind je Schienenpaarseite - innen oder außen - zwei, drei oder mehrere Wälzlaufbahnen im Zusammenwirkungsbereich der Sitzschienen vorgesehen, wobei die Wälzelemente einer jeden Wälzlaufbahn zumindest zwei oder mehrere Schienenkontakte aufweisen können.

Für ein leichtes Verschieben der Sitzschienen zueinander sind je Wälzlaufbahn mehrere Wälzelemente, beispielsweise Wälzkugeln oder Wälzzylinder, nebeneinander angeordnet.

Der erfindungsgemäße Fahrzeugsitz umfasst zur Einstellung seiner Längsposition einen Längseinsteller, der mit zwei der zuvor beschriebenen Schienenpaare ausgestattet ist.

Durch die Ausstattung des Fahrzeugsitzes mit zwei erfindungsgemäßen Schienenpaaren weist dieser gegenüber herkömmlichen Fahrzeugsitzen einen verbesserten Längseinsteller mit verbesserter Schienenführung und Schienenfestigkeit auf, wobei durch die erfindungsgemäße abgeknickte oder nach außen gebogene Seitenwand (Knick/Biegung in der Seitenwand) eine Versteifung/Stützung erzielt wird und eine erhöhte Schälfestigkeit erreicht wird.

Ein mit zwei erfindungsgemäßen Schienenpaaren ausgestatteter Fahrzeugsitz wird in einem Kraftfahrzeug eingesetzt, und zwar in der Regel als Vordersitz. Die als Längseinsteller dienenden Schienenpaare sind derart angebracht, dass eine der Sitzschienen die Unterschiene und eine fahrzeugstrukturfeste Führungsschiene und die andere Sitzschiene die Oberschiene und eine sitzstrukturfeste Gleitschiene bilden. Die Funktionen der beiden Sitzschienen können aber auch genau umgekehrt sein.

Ausführungsbeispiele der Erfindung werden anhand von Zeichnungen näher erläutert. Dabei zeigen:
- Figur 1: schematisch in perspektivischer Darstellung einen Fahrzeugsitz mit zwei Schienenpaaren,
- Figur 2: schematisch im Querschnitt ein Ausführungsbeispiel für ein erfindungsgemäßes Schienenpaar mit einer teilweise nach außen gebogenen Seitenwand der oberen Sitzschiene,
- Figuren 3 und 5: schematisch im Querschnitt weitere Ausführungsbeispiele für ein erfindungsgemäßes Schienenpaar mit einer teilweise nach außen gebogenen Seitenwand der oberen Sitzschiene, und
- Figur 4: ein nicht erfindungsgemäßes Ausführungsbeispiel eines Schienenpaares.

Einander entsprechende Teile sind in allen Figuren mit den gleichen Bezugszeichen versehen.

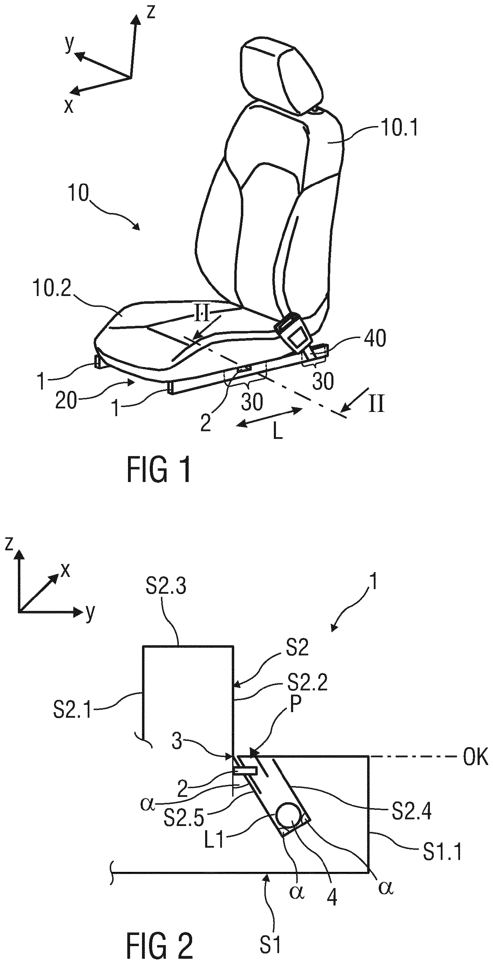

Figur 1 zeigt schematisch in perspektivischer Darstellung einen Fahrzeugsitz 10.

Der Fahrzeugsitz 10 umfasst eine Sitzlehne 10.1 und eine Sitzfläche 10.2. Darüber hinaus ist der Fahrzeugsitz 10 in Längsrichtung L längsverschieblich gegenüber einem Boden oder einer anderen Fahrzeugstruktur ausgebildet. Hierzu umfasst der Fahrzeugsitz 10 einen Längseinsteller 20.

Der Längseinsteller 20 umfasst zumindest zwei Schienenpaare 1, die parallel zueinander an der Unterseite der Sitzfläche 10.2 angeordnet sind.

In einem Anbindungsbereich 30, zum Beispiel im Bereich einer Gurtanbindung 40 oder einer Schienenverriegelung 2, ist das jeweilige Schienenpaar 1 entsprechend geformt, wie nachfolgend beschrieben:
Figur 2 zeigt schematisch im Schnitt ein einzelnes Schienenpaar 1 für den Fahrzeugsitz 10 im Bereich einer Schienenverriegelung 2.

Das erfindungsgemäße Schienenpaar 1 umfasst zwei Sitzschienen S1 und S2. Dabei ist beispielsweise die Sitzschiene S1 eine fahrzeugfeste, untere Schiene und die andere Sitzschiene S2 eine sitzfeste, obere Schiene.

Zur Längseinstellung auf seinen beiden in Fahrtrichtung links und rechts gelegenen Seiten weist der Fahrzeugsitz 10 je ein erfindungsgemäßes Schienenpaar 1 auf. Die fahrzeugfeste, untere Sitzschiene S1 bildet dabei eine Führungsschiene für die sitzfeste, obere Sitzschiene S2, die als Gleitschiene ausgebildet ist. Die Sitzschienen S1, S2 sind auf beiden Seiten des Fahrzeugsitzes 10 gleich aufgebaut, so dass im Folgenden der Einfachheit halber nur die Sitzschienen S1, S2 und das Schienenpaar 1 auf einer Seite beschrieben werden.

Die Sitzschienen S1, S2 sind derart ausgeformt, dass sie einander unter Bildung eines Schienenprofils wechselseitig umgreifen und relativ zueinander in Längsrichtung beweglich sind und miteinander mittels einer Schienenverriegelung 2 verriegelbar sind.

Die beiden Sitzschienen S1, S2 sind näherungsweise U-förmig ausgebildet. Die obere Sitzschiene S2 weist zwei Seitenwände S2.1 und S2.2 auf, die in Vertikalausrichtung (Z-Richtung) von deren Bodenbereich S2.3 weitgehend parallel und senkrecht abragen.

Im weiteren Verlauf ist eine der Seitenwände S2.1 oder S2.2, im Ausführungsbeispiel nach Figur 2 die Seitenwand S2.2, in Vertikalausrichtung nach außen gebogen. Dabei weist die obere Seitenwand S2.2 entlang der Längsrichtung L abwechselnd Abschnitte mit langen und kurzen senkrechten oberen Seitenwänden S2.2 auf. Die freien Enden der oberen Seitenwand S2.2 sind mehrfach nach außen gebogen, wobei ein erster Knick 3 mit einem Biegewinkel α kleiner 80°, insbesondere kleiner 75° und größer 35°, nach außen gebogen ist.

Im Weiteren wird der erste Knick 3 nur kurz Knick 3 genannt.

Die im weiteren Verlauf eingebrachten Biegungen weisen einen Biegewinkel α von größer 80° auf und bilden Wälzlaufbahnen L1 bis L3.

Gemäß einer Weiterbildung kann die Seitenwand S2.2 nur in Anbindungsbereichen 30 mit dem Knick 3 versehen und nach außen gebogen sein. Außerhalb der Anbindungsbereiche 30 entfällt der erste Knick 3 und die freien Enden der oberen Seitenwand S2.2 sind mit Biegungen mit einem Biegewinkel α von größer 80° versehen oder verlaufen senkrecht.

Bei einem derart ausgebildeten Schienenpaar 1 mit einer bereichsweise abgeknickten und nach außen gebogenen Seitenwand S2.2 der Sitzschiene S2 und somit durch eine Schrägstellung der Seitenwand S2.2 oder Seitenflanke, ist eine Festigkeit, insbesondere eine Schälfestigkeit, dieser Sitzschiene S2 in diesem Bereich deutlich verbessert. Die teilweise Schrägstellung der Seitenwand S2.2, beispielsweise in einem Winkel von größer 100° bis 150°, weist in Richtung Krafteinleitungspunkt, wie anhand Pfeil P gezeigt. Hierdurch wird eine Streckung der Sitzschiene S2 und des Profils beispielsweise in einem Anbindungsbereich 30, wie einem Gurtanbindungsbereich 40 oder im Bereich einer Schienenverriegelung 2, reduziert. Die von einer Kraftwirkungslinie abweichenden Profilgeometrien der Sitzschiene S2 haben das Bestreben sich entlang dieser Linie des Pfeils P auszurichten. Durch die Schrägstellung der Seitenwand S2.2 wird diesem vorgegriffen.

Die Seitenwand S2.2 ist dabei derart in Längsrichtung L nur bereichsweise nach außen gebogen, dass diese zumindest in einem der Anbindungsbereiche 30 der zugehörigen Sitzschiene S2 mit dem Knick 3 versehen ist, der sich zumindest im Anbindungsbereich 30 entlang der Längsrichtung L der Sitzschiene S2 erstreckt. Durch die Schrägstellung der Seitenwand S2.2 nur in diesem Anbindungsbereich 30, beispielsweise von weiteren Komponenten, wie zum Beispiel einer Gurtanbindung, ist die Festigkeit, insbesondere die Schälfestigkeit, in diesem Anbindungsbereich 30 gegenüber den anderen Schienenbereichen mit nur vertikalen Seitenwänden S2.2 deutlich erhöht und verbessert.

Des Weiteren ist eine an die teilweise nach außen gebogene Seitenwand S2.2 der Sitzschiene S2 angrenzende Seitenwand S1.1 der unteren Sitzschiene S1 korrespondierend nach innen gebogen. Durch Schrägstellung auch der Seitenwand S1.1 der Unterschiene korrespondierend zur Schrägstellung der Seitenwand S2.2 der Oberschiene wird die Festigkeit noch weiter erhöht und ist ein homogener Kontakt beider Sitzschienen S1, S2 gegeben.

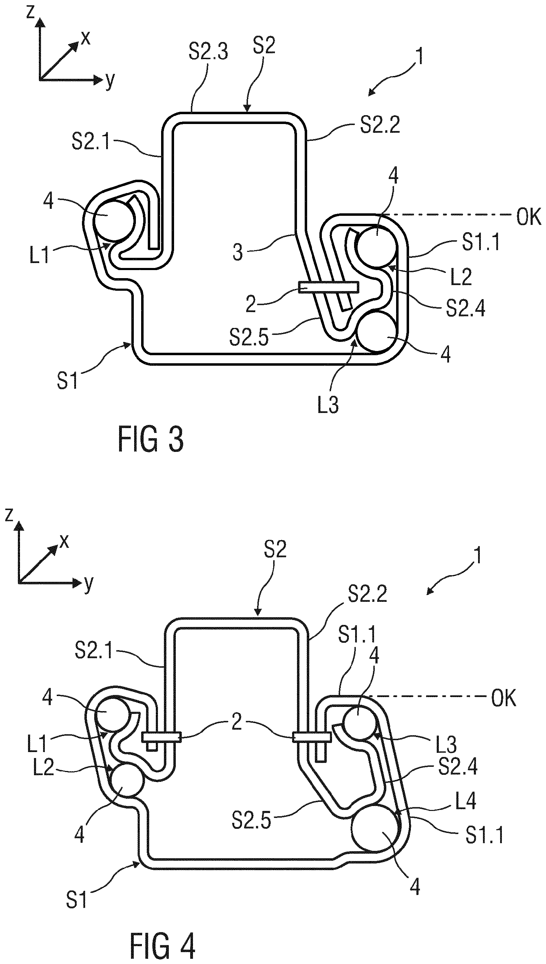

Im Ausführungsbeispiel nach Figur 2 ist der Knick 3 in der Sitzschiene S2 im Wesentlichen auf Höhe einer Oberkante OK der anderen Sitzschiene S1 angeordnet. Alternativ kann der Knick 3 bei einer nicht erfindungsgemäßen Ausführungsform auch unterhalb der Oberkante OK in die Seitenwand S2.2 eingebracht sein, wie in Figur 4 dargestellt.

Des Weiteren ist die obere Sitzschiene S2 im abgeschrägten Wandbereich mehrfach nach außen gewölbt. Insbesondere ist die Seitenwand S2.2 im nach außen gebogenen Wandbereich im Querschnitt U-förmig ausgebildet. In einer Ausführungsform sind beide Schenkel S2.4, S2.5 des nach außen mehrfach gebogenen, U-förmigen Bereiches parallel zueinander angeordnet, wodurch zumindest auf dieser Schienenpaarseite eine Wälzlaufbahn L1 für mindestens ein Wälzelement 4 gebildet ist.

Die Seitenwände S1.1 der unteren Sitzschiene S1 sind hierzu korrespondierend mehrfach nach innen gewölbt oder gebogen. Die Sitzschienen S1, S2 sind so ineinander geschoben, dass sie mit ihren seitlich gewölbten oder gebogenen Rändern einander hintergreifen, wodurch in diesen Randbereichen ein Zusammenwirkungsbereich der Sitzschienen S1, S2, in welchem Wälzelemente 4 beweglich in Wälzlaufbahnen L1 zwischen den Sitzschienen S1, S2 gelagert sind, gebildet ist.

Figur 2 zeigt eine der Schienenpaarseiten mit einer Wälzlaufbahn L1.

Figur 3 zeigt ein Ausführungsbeispiel für ein weiteres Schienenpaar 1 mit mehreren Wälzlaufbahnen L1 bis L3. Zur Ausbildung von mehreren Wälzlaufbahnen L1 bis L3 ist zumindest einer der beiden Schenkel S2.4 des nach außen gebogenen oder geknickten, u-förmigen Bereichs der Seitenwand S2.2 mit einem Wellenprofil versehen oder ist mehrfach gebogen oder abgewinkelt ausgeführt. Im Ausführungsbeispiel weist das Wellenprofil des Schenkels 2.4 zwei Wellentäler auf, welche jeweils eine Wälzlaufbahn L2, L3 für die Wälzelemente 4 bilden.

Die Seitenwand S2.2 ist gering unterhalb der Oberkante OK der anderen, unteren Sitzschiene S1 abgeknickt oder nach außen gebogen. Auf der gegenüberliegenden Schienenpaarseite weist das Schienenpaar 1 durch entsprechende Profilierung der Enden der Seitenwände S2.1 der Sitzschiene S1, S2 nur eine Wälzlaufbahn L1 auf.

Die Wälzelemente 4 einer jeden Wälzlaufbahn L1 bis L4 weisen jeweils zumindest zwei Schienenkontakte oder Berührungspunkte auf, wobei je Sitzschiene S1, S2 zumindest ein Schienenkontakt gegeben ist.

Für eine mehrfache, insbesondere zwei-, drei- oder vierfache und symmetrische oder unsymmetrische Ausgestaltung der Schienenführung mit zwei, drei oder vier Wälzlaufbahnen L1 bis L4 sind die Randbereiche der Sitzschienen S1, S2 entsprechend gebogen und können zwei Wälzlaufbahnen L1 bis L2, drei Wälzlaufbahnen L1 bis L3 oder vier Wälzlaufbahnen mit entsprechender Anzahl von Schienenkontakten bilden. Dabei können die Wälzlaufbahnen L1 bis L4 symmetrisch oder unsymmetrisch auf die Seiten verteilt sein.

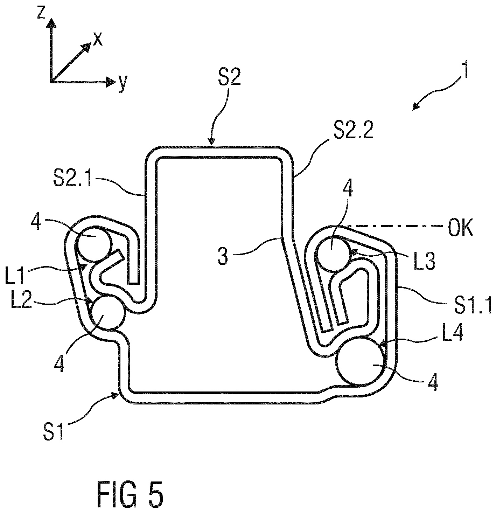

Figuren 3 bis 5 zeigen weitere Ausführungsbeispiele für Schienenpaare 1 mit unsymmetrischem Aufbau und drei Wälzlaufbahnen L1 bis L3 (Figur 3) oder vier Wälzlaufbahnen L1 bis L4 (Figuren 4 und 5) und entsprechend gebogenen Randbereichen, wobei jeweils die Seitenwand S2.2 - erfindungsgemäß - im Bereich der Oberkante OK der unteren Sitzschiene S1 (Figuren 3 und 5) oder - nicht erfindungsgemäß - unterhalb dieser abgeknickt (Figur 4) und somit zumindest teilweise schräg nach außen gebogen ist.

Der Fahrzeugsitz 10 umfasst zur Einstellung seiner Längsposition den Längseinsteller 20, der mit zwei der zuvor beschriebenen erfindungsgemäßen Schienenpaare 1 gemäß den Figuren 2, 3 oder 5 ausgestattet ist.

Durch die Ausstattung des Fahrzeugsitzes 10 mit zwei erfindungsgemäßen Schienenpaaren 1 weist dieser gegenüber herkömmlichen Fahrzeugsitzen eine Schienenverstellung mit einer höheren Festigkeit auf.

Ein solcher Fahrzeugsitz 10 wird in einem Kraftfahrzeug eingesetzt, in der Regel als Vordersitz. Die als Längseinsteller 20 dienenden Schienenpaare 1 sind derart angebracht, dass eine der Sitzschienen S1 die Unterschiene und eine fahrzeugstrukturfeste Führungsschiene und die andere Sitzschiene S2 die Oberschiene und eine sitzstrukturfeste Gleitschiene bilden. Die Funktionen der beiden Sitzschienen S1, S2 können aber auch genau umgekehrt sein.

### Bezugszeichenliste

- 1: Schienenpaar
- 2: Schienenverriegelung
- 3: Knick
- 4: Wälzelemente
- 10: Fahrzeugsitz
- 10.1: Sitzlehne
- 10.2: Sitzteil
- 20: Längseinsteller
- 30: Anbindungsbereich
- 40: Gurtanbindung

- S1: (untere) Sitzschiene
- S1.1: Seitenwand
- S2: (obere) Sitzschiene
- S2.1, S2.2: Seitenwand
- S2.3: Bodenbereich
- S2.4, S2.5: Schenkel
- L1 bis L4: Wälzlaufbahnen
- L: Längsrichtung
- OK: Oberkante
- P: Pfeil
- α: Biegewinkel

## Patentansprüche

1. Schienenpaar (1) für einen Fahrzeugsitz (10), umfassend
- eine untere Sitzschiene (S1) und eine obere Sitzschiene (S2), die einander unter Bildung eines Schienenprofils wechselseitig umgreifen und relativ zueinander in Längsrichtung (L) beweglich sind und miteinander mittels einer Schienenverriegelung (2) verriegelbar sind, wobei die Sitzschienen (S1, S2) so ineinander geschoben sind, dass sie mit ihren seitlich gewölbten oder gebogenen Rändern einander hintergreifen, wodurch in diesen Randbereichen ein Zusammenwirkungsbereich der Sitzschienen (S1, S2), in welchem Wälzelemente (4) beweglich in Wälzlaufbahnen (L1 bis L4) zwischen den Sitzschienen (S1, S2) gelagert sind, gebildet ist, und wobei
- die obere Sitzschiene (S2) zwei Seitenwände (S2.1, S2.2) umfasst, die in Vertikalausrichtung von deren Bodenbereich (S2.3) weitgehend parallel und senkrecht abragen und
- bereichsweise in Längsrichtung (L) eine der Seitenwände (S2.2) der oberen Sitzschiene (S2) im weiteren Verlauf in Vertikalausrichtung mit einem Knick (3) versehen und nach außen gebogen ist, **dadurch gekennzeichnet, dass** der Knick (3) in der oberen Sitzschiene (S2) im Wesentlichen auf Höhe einer Oberkante (OK) der unteren Sitzschiene (S1) eingebracht ist, wobei die an die teilweise nach außen gebogene Seitenwand (S2.2) der oberen Sitzschiene (S2) angrenzende Seitenwand (S1.1) der unteren Sitzschiene (S1) korrespondierend nach innen gebogen ist.

2. Schienenpaar (1) nach Anspruch 1,
**dadurch gekennzeichnet, dass** die eine Seitenwand (S2.2) derart nach außen gebogen ist, dass diese zumindest in einem Anbindungsbereich (30) der zugehörigen Sitzschiene (S2) mit dem Knick (3) versehen ist, der sich zumindest im Anbindungsbereich (30) entlang der Längsrichtung (L) der Sitzschiene (S2) erstreckt.

3. Schienenpaar (1) nach einem der vorhergehenden Ansprüche,
**dadurch gekennzeichnet, dass** die eine Seitenwand (S2.2) im nach außen gebogenen Bereich im Querschnitt im Wesentlichen U-förmig ist.

4. Schienenpaar (1) nach Anspruch 3,
**dadurch gekennzeichnet, dass** beide Schenkel (S2.4, S2.5) des nach außen gebogenen und U-förmigen Bereichs parallel zueinander angeordnet sind.

5. Schienenpaar (1) nach Anspruch 3 oder 4,
**dadurch gekennzeichnet, dass** zumindest einer der beiden Schenkel (S2.4, S2.5) ein Wellenprofil aufweist.

6. Schienenpaar (1) nach einem der vorhergehenden Ansprüche,
**gekennzeichnet durch** zwei, drei oder mehrere Wälzlaufbahnen (L1 bis L4) im Zusammenwirkungsbereich der Sitzschienen (S1, S2), wobei die Wälzelemente (4) einer jeden Wälzlaufbahn (L1 bis L4) zumindest zwei oder mehrere Schienenkontakte aufweisen.

7. Längseinsteller (20) mit mindestens zwei Schienenpaaren (1) nach einem der vorhergehenden Ansprüche.

8. Fahrzeugsitz (10) mit einem Längseinsteller (20) nach Anspruch 7, umfassend mindestens zwei Schienenpaare (1) nach einem der Ansprüche 1 bis 6.

## Claims

1. Pair of slides (1) for a vehicle seat (10), comprising
- a lower seat slide (S1) and an upper seat slide (S2) which, while forming a slide profile, alternately encompass one another and are movable relative to one another in the longitudinal direction (L), and are able to be mutually locked by means of a slide locking mechanism (2), wherein the seat slides (S1, S2) are inserted into one another in such a way that they engage behind one another by way of their laterally curved or bent peripheries, as a result of which an interaction region of the seat slides (S1, S2) is formed in these peripheral regions, in which interaction region rolling elements (4) are mounted so as to be movable in rolling raceways (L1 to L4) between the seat slides (S1, S2), and wherein
- the upper seat slide (S2) comprises two lateral walls (S2.1, S2.2) which, in a vertical orientation, protrude from their base region (S2.3) in a largely parallel and perpendicular manner; and
- one of the lateral walls (S2.2) of the upper seat slide (S2), in portions in the longitudinal direction (L), in the further course in the vertical orientation is provided with a kink (3) and is bent outwards,
**characterized in that**
the kink (3) in the upper seat slide (S2) is incorporated so as to be substantially level with the height of an upper edge (OK) of the lower seat slide (S1), wherein the side wall (S1.1) of the lower seat slide (S1) that is contiguous to the partially outward-bent lateral wall (S2.2) of the upper seat slide (S2) is correspondingly bent inwards.

2. Pair of slides (1) according to Claim 1, **characterized in that** the one lateral wall (2.2) is bent outwards in such a manner that the latter, at least in an attachment region (30) of the associated seat slide (S2), is provided with the kink (3) that at least in the attachment region (30) extends along the longitudinal direction (L) of the seat slide (S2) .

3. Pair of slides (1) according to one of the preceding claims, **characterized in that** the one lateral wall (S2.2) in the outward-bent region is substantially U-shaped in the cross section.

4. Pair of slides (1) according to Claim 3, **characterized in that** both legs (S2.4, S2.5) of the outward-bent and U-shaped region are disposed so as to be mutually parallel.

5. Pair of slides (1) according to Claim 3 or 4, **characterized in that** at least one of the two legs (S2.4, S2.5) has a corrugated profile.

6. Pair of slides (1) according to one of the preceding claims, **characterized by** two, three, or a plurality of rolling raceways (L1 to L4) in the interaction region of the seat slides (S1, S2), wherein the rolling elements (4) of each of the rolling raceways (L1 to L4) have at least two, or a plurality of, slide contacts.

7. Longitudinal adjuster (20) having at least two pairs of slides (1) according to one of the preceding claims.

8. Vehicle seat (10) having a longitudinal adjuster (20) according to Claim 7, comprising at least two pairs of slides (1) according to one of Claims 1 to 6.

## Revendications

1. Paire de rails (1) destinée à un siège de véhicule (10), ladite paire de rail comprenant
- un rail de siège inférieur (S1) et un rail de siège supérieur (S2) qui s'engagent l'un autour de l'autre pour former un profilé de rail et qui sont mobiles l'un par rapport à l'autre dans la direction longitudinale (L) et qui peuvent être verrouillés l'un à l'autre au moyen d'un dispositif de verrouillage de rail (2), les rails de siège (S1, S2) étant poussés l'un dans l'autre de manière à s'engager l'un derrière l'autre au niveau de leurs bords latéralement incurvés ou recourbés, ce qui forme dans ces zones de bord une zone de coopération des rails de siège (S1, S2), dans laquelle des éléments roulants (4) sont logés de manière mobile dans des chemins de roulement (L1 à L4) entre les rails de siège (S1, S2), et
- le rail de siège supérieur (S2) comprenant deux parois latérales (S2.1, S2.2) qui font saillie, dans une large mesure parallèlement et perpendiculairement, de leur zone de fond (S2.3) suivant une orientation verticale et
- dans certaines zones dans la direction longitudinale (L), l'une des parois latérales (S2.2) du rail de siège supérieur (S2) étant dotée d'un coude (3) dans la suite de l'orientation verticale et étant recourbée vers l'extérieur,
**caractérisée** en que
le coude (3) du rail de siège supérieur (S2) est introduit sensiblement au niveau d'un bord supérieur (OK) du rail de siège inférieur (S1), la paroi latérale (S1.1) du rail de siège inférieur (S1), qui est adjacente à la paroi latérale (S2.2), partiellement recourbée vers l'extérieur, du rail de siège supérieur (S2), étant recourbée de manière correspondante vers l'intérieur.

2. Paire de rails (1) selon la revendication 1,
**caractérisée en ce qu'**une paroi latérale (S2.2) est recourbée vers l'extérieur de manière à être dotée du coude (3) au moins dans une zone de raccordement (30) du rail de siège (S2) associé, lequel coude s'étend au moins dans la zone de raccordement (30) le long de la direction longitudinale (L) du rail de siège (S2).

3. Paire de rails (1) selon l'une des revendications précédentes,
**caractérisée en ce qu'**une paroi latérale (S2.2) présente dans la zone recourbée vers l'extérieur une section transversale sensiblement en forme de U.

4. Paire de rails (1) selon la revendication 3,
**caractérisée en ce que** les deux branches (S2.4, S2.5) de la zone recourbée vers l'extérieur et en forme de U sont disposées parallèlement l'une à l'autre.

5. Paire de rails (1) selon la revendication 3 ou 4,
**caractérisée en ce qu'**au moins une des deux branches (S2.4, S2.5) présente un profil ondulé.

6. Paire de rails (1) selon l'une des revendications précédentes,
**caractérisée par** deux, trois ou plusieurs chemins de roulement (L1 à L4) dans la zone de coopération des rails de siège (S1, S2), les éléments roulants (4) de chaque chemin de roulement (L1 à L4) comportant au moins deux contacts de rail ou plus.

7. Dispositif de réglage longitudinal (20) comprenant au moins deux paires de rails (1) selon l'une des revendications précédentes.

8. Siège de véhicule (10) muni d'un dispositif de réglage longitudinal (20) selon la revendication 7, ledit siège comprenant au moins deux paires de rails (1) selon l'une des revendications 1 à 6.
